# EUROPÄISCHE PATENTSCHRIFT

(11) **EP 3 862 198 B1**
(45) Veröffentlichungstag und Bekanntmachung des Hinweises auf die Patenterteilung: **05.04.2023**
(21) Anmeldenummer: 21155590.9
(22) Anmeldetag: 05.02.2021
(51) Int. Cl.: B60C 25/02, B60C 25/00

(54) **FAHRRADWERKZEUG**
BICYCLE TOOL
OUTIL DE BICYCLETTE

(30) Priorität: 05.02.2020 DE 102020102873
(43) Veröffentlichungstag der Anmeldung: 11.08.2021
(73) Patentinhaber: Friedrich, Max, 65779 Kelkheim (DE)
(72) Erfinder: Friedrich, Max, 65779 Kelkheim (DE)
(74) Vertreter: Tergau & Walkenhorst Patentanwälte PartGmbB

(56) Entgegenhaltungen:
- DE-C- 212 038
- FR-E- 8 742
- US-A1- 2013 192 767

## Beschreibung

Die Erfindung betrifft ein Fahrradwerkzeug nach dem Oberbegriff von Anspruch 1. Seit der Markteinführung von Reifeneinlagen (Pannenschutz) bei vorwiegend Mountain-bike-Tubeless-Reifen treten vermehrt Probleme bei der Montage und Demontage von Fahrradreifen auf. Eine Reifeneinlage stellt ein zusätzliches Hindernis, bzw. einen Widerstand dar. Bei der Montage müssen Reifenwulst und die Reifeneinlage in die richtige Position gebracht werden, damit der Reifen sich montieren lässt. Dies wird bisher von erfahrenen Mechanikern von Hand gemacht, was allerdings ermüdend ist, bzw. sogar zu Verletzungen führen kann. Für Laien ist es teilweise unmöglich, den Reifen zu montieren.

Nach der vollständigen Montage rastet nach Druckbeaufschlagung der Reifenwulst im Felgenhorn ein und stellt so eine feste formschlüssige Verbindung dar. Um diesen nach Druckausgleich bei der Demontage zu lösen, muss die Reifeneinlage im Reifeninnern von der Öffnungsseite weg geschoben werden und der Reifenwulst vom Felgenhorn gelöst werden. Dies ist bisher ausschließlich mit bloßen Händen von erfahrenen Mechanikern unter teilweise hohem Kraftaufwand möglich.

Aus der US 2013/0192767 A1 ist ein gattungsbildender Reifenheber bekannt. Der Reifenheber weist eine Öffnung zur Aufnahme der Finger des Benutzers auf. Der Reifenheber weist einen ersten Haken mit einer Kante zum Montieren des Reifens und einen zweiten Haken mit einer zwischen Haken und Reifenheberkörper gebildeten Nut zum Lösen des Reifens auf.

Die DE 20 2012 104 057 U1 beschreibt ein einen Reifenheber mit einem länglichen Körperteil und einen hakenförmigen Reifeneingriffsabschnitt.

Aus der GB 2507125 A ist eine Vorrichtung zum Halten eines Fahrradrades in einem Fahrradrahmen bekannt.

Die DE 20 2014 006 778 U1 beschreibt ein Montagewerkzeug für Fahrradreifen, mit einem langestreckten Grundkörper, der an einem Ende eine rinnenartige Ausbildung zum Hintergreifen eines Reifenwulstes beim Demontieren und Montieren eines Fahrradreifens von einer Felge aufweist.

Aus der GB 2524223 A ist ein Werkzeug zum Lösen eines Fahrradreifens von der Felge bekannt.

Die DE 212 038 C beschreibt ein Vorrichtung zur Erleichterung des Abnehmens und Auflegens von Laufmänteln mit einem mit drei Armen versehenen Griff, die so angeordnet sind, daß bei der Handhabung der Vorrichtung der untere Arm sich gegen die Außenseite des Radkranzes stützt, der mittlere über den Rand der Felgegeschoben wird und mit seinen umgebogenen Enden hinter den Rand der Felge und den Wulst des Laufmantels greift, während der gebogene obere Arm sich auf die Außenfläche des Mantels stützt und das Kippen der Vorrichtung verhindert, so daß die Vorrichtung selbsttätig in der ihr gegebenen Stellung verbleibt.

Aus der FR 8 742 E ist ein Reifenwerkzeug zur Montage und Demontage von Fahrradreifen mit einer Öffnung für die Finger des Nutzers bekannt.

Nachteilig bei bekannten Reifenhebern ist, dass sie bei einer Reifeneinlage nur mit erheblichem Aufwand das Ersetzen eines Reifens ermöglichen.

Der Erfindung liegt daher die Aufgabe zugrunde, ein Fahrradwerkzeug bereitzustellen, welches eine verbesserte Reifenmontage und -demontage ermöglicht. Diese Aufgabe wird erfindungsgemäß gelöst durch die Merkmale des Anspruchs 1.

Vorteilhafte Ausgestaltungen der Erfindung sind Gegenstand der Unteransprüche.

Die Erfindung geht von der Überlegung aus, dass bekannte Reifenheber nur ungenügend zur Reifenmontage und -demontage geeignet sind, wenn der Reifen schlauchlos ausgebildet ist und eine Reifeneinlage vorhanden ist.

Wie nunmehr erkannt wurde, wird eine Montage in diesen Fällen komfortabel möglich, wenn der Montage-Haken einen Rüssel aufweist, mit dessen Hilfe während der Reifenmontage der Reifenwulst verschoben werden kann. Als Rüssel wird hierbei bevorzugt ein längliches Teil des Montage-Hakens bezeichnet, welches solide oder hohl sein kann.

Erfindungsgemäß schließt sich der Rüssel an ein gerades Hakenstück an. Auf dem geraden Hakenstück kann der Reifen entlanggleiten, wenn das Werkzeug im Felgenbett hin und -hergeschoben wird. Das gerade Hakenstück ist dabei zwischen dem Körper des Fahrradwerkzeuges und dem Rüssel angeordnet, der Rüssel bildet dabei das Endstück des Montage-Hakens.

Erfindungsgemäß weist der Rüssel ein erstes Stück auf, welches zum Körper hingebogen ist, und ein sich daran anschließendes zweites Stück, welches vom Körper weggebogen ist und eine Nase zur Führung des Reifenwulstes bildet. Der Rüssel bildet eine Nut, in der der Reifenwulst bei der Montage geführt wird und erleichtert den Zugang ins Felgenbett unter die Reifeneinlage. Das zweite gebogene (End-) Stück vermindert zusätzlich die Gefahr der Beschädigung des sich gegebenenfalls auf dem Felgenbett befindlichem Felgenbandes. Das End-Stück ist somit das am weitesten vom Körper entfernte Stück entlang des Montage-Hakens gesehen.

Vorteilhafterweise ist zwischen dem Demontage-Haken und dem Körper eine Nut gebildet. Die Nut bzw. der Spalt hat vorteilhafterweise die Mindestdicke einer Felgenflanke. Die Spaltbreite ist dabei vorteilhafterweise zwischen 2,6 und 4 mm. Der Vorteil der Nut ist die Führung des Werkzeuges bei der Rundherum-Bewegung, d. h. der umfangseitigen Bewegung am Felgenflansch bzw. an der Felge entlang, sodass das Werkzeug umfangsseitig im Wesentlichen entlang der ganzen Felge geführt wird.

Der Demontage-Haken weist bevorzugt einen Höcker auf. In Kombination mit der Nut kann damit ein zur Demontage benötigter Abstand von Felgenhorn und Reifenwulst realisiert werden. Der Höcker ist vorteilhafterweise wie ein Keil geformt, der ein "Heraustreiben" des Reifenwulstes aus dem Felgenhorn bewirkt. Durch die Verschiebung des Reifenwulstes zur Felgenmitte hin (hier befindet sich der kleinste Durchmesser) lockert sich der Reifen für eine einfachere Demontage. Der Höcker ist auf der dem Körper abgewandten Seite des Demontage-Hakens ausgebildet.

Der Demontage-Haken weist vorteilhafterweise einen Einrasthaken für ein Felgenhorn auf, wodurch das Handling erleichtert wird.

Der Demontage-Haken und der Montage-Haken sind in einer bevorzugten Ausführungsform auf entgegengesetzten Seiten des Körpers am gleichen Ende des Körpers angeordnet.

An einem Ende des Körpers ist in einer vorteilhaften Ausführungsform ein dritter Haken zur Demontage des Reifens vorgesehen. Der dritte, insbesondere kleinere, Haken rastet im Felgenflansch ein und verhindert ein unbeabsichtigtes Herausrutschen. So kann das Fahrradwerkzeug beim rundherum-Bewegen durch den Felgenflansch geführt werden, d. h. umfangsseitig entlang der Felge. Der dritte Haken ist entbehrlich, wenn der Anwender das Werkzeug stets mit einem Druck zur Radmitte führt.

Der dritte Haken weist vorteilhafterweise ein kantenförmiges Endstück auf. Das kantenförmige Endstück dient dazu, den Haken zur Demontage des Reifens zwischen Reifen und Felge zu schieben.

Das kantenförmige Endstück ist in einer bevorzugten Ausführung gebogen, wodurch die Führung des Endstückes zwischen Reifen und Felge unterstützt wird.

Der dritte Haken ist vorzugsweise am entgegengesetzten Ende zu den Demontage- und Montage-Haken angeordnet.

Ein Ausführungsbeispiel der Erfindung wird anhand einer Zeichnung näher erläutert. Darin zeigen in stark schematisierter Darstellung:
- FIG. 1: einen Reifen, eine Reifeneinlage und eine Felge in einem Querschnitt;
- FIG. 2: ein Fahrradwerkzeug in einer bevorzugten Ausführungsform in einer Seitenansicht;
- FIG. 3: das Fahrradwerkzeug gemäß FIG. 2 in einer ersten perspektivischen Ansicht;
- FIG. 4: das Fahrradwerkzeug gemäß FIG. 2 in einer zweiten perspektivischen Ansicht;
- FIG. 5: das Fahrradwerkzeug gemäß FIG. 2 in einer Vorderansicht;
- FIG. 6: das Fahrradwerkzeug gemäß FIG. 2 in einer Rückansicht;
- FIG. 7: das Fahrradwerkzeug gemäß FIG. 2 in einem Montageschritt;
- FIG. 8: das Fahrradwerkzeug gemäß FIG. 2 in einem Demontageschritt; und
- FIG. 9: das Fahrradwerkzeug gemäß FIG. 2 in einem weiteren Demontageschritt.

Gleiche Teile sind in allen Figuren mit denselben Bezugszeichen versehen.

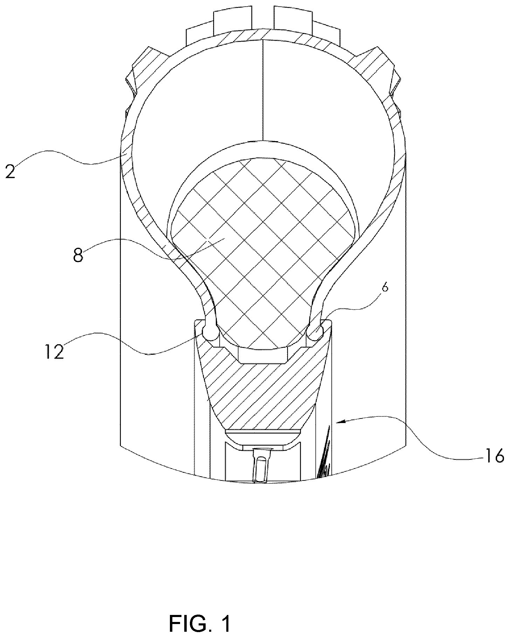

In FIG. 1 ist in einem Querschnitt ausschnittsweise ein Fahrradreifen 2 dargestellt, welcher mit einem Reifenwulst 6 in einem Felgenhorn 12 einer Felge 16 gehalten wird. Dargestellt ist weiterhin eine Reifeneinlage 8. Der Reifen 2 ist "tubeless" bzw. schlauchlos ausgebildet, weist also keinen separaten Schlauch zum Halten der Luft auf. Die Reifeneinlage 8 ist zur Pannensicherheit im Reifen 2 angeordnet und ermöglicht ein Weiterfahren mit dem Fahrrad, auch wenn der Reifen 2 ein Loch hat und Luft entweicht. Die Reifeneinlage 8 ermöglicht auch generell ein Fahren mit niedrigerem Luftdruck zur Verbesserung der Fahreigenschaften.

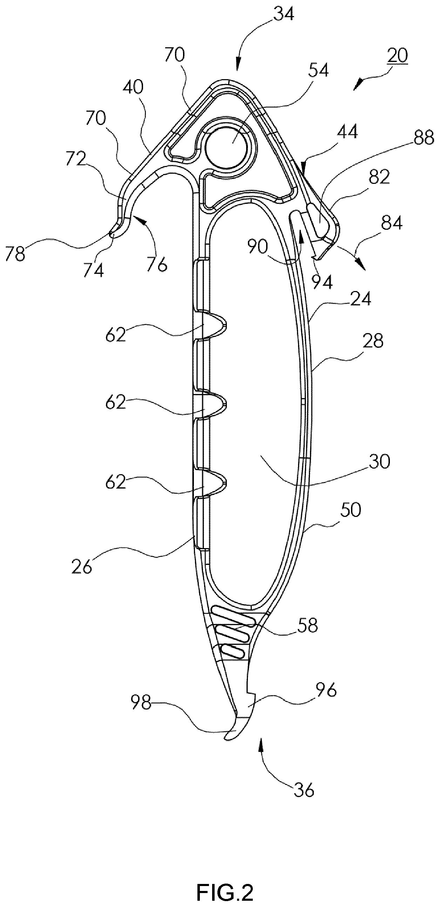

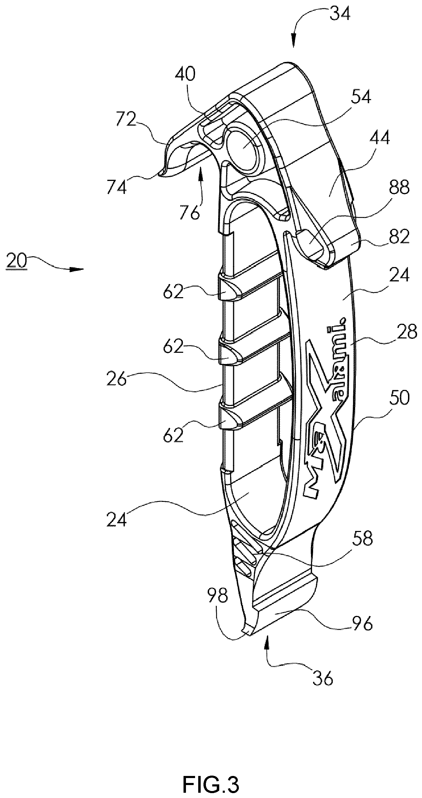

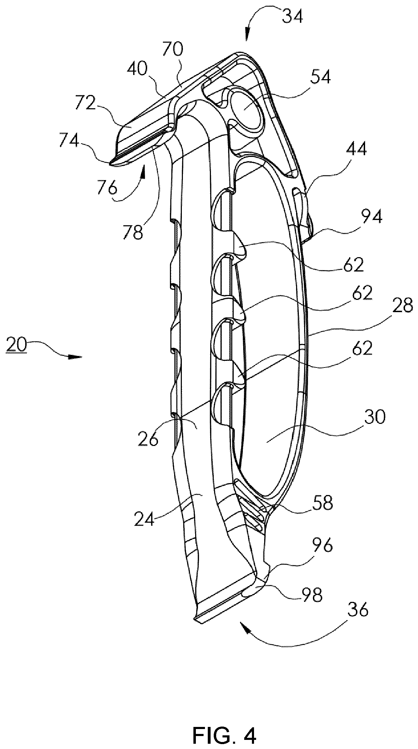

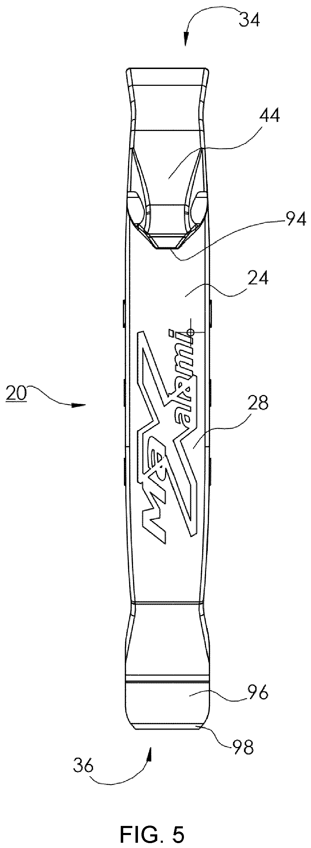

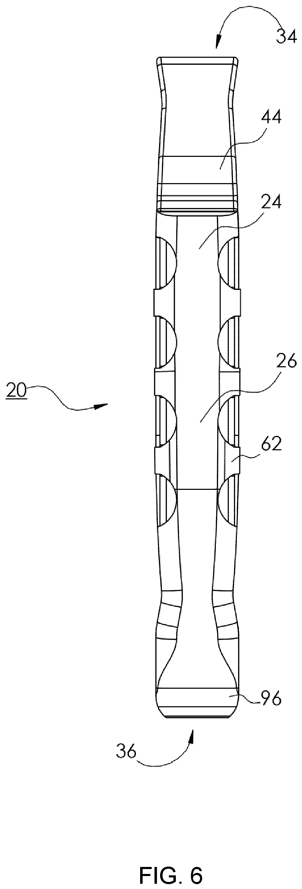

In den FIG. 2-6 ist ein Fahrradwerkzeug 20 in einer bevorzugten Ausführung gezeigt. Das Fahrradwerkzeug 20 weist einen Körper 24 auf, welcher eine erste Seite 26 und eine zweite Seite 28 aufweist.

Zwischen den Seiten 26, 28 ist eine Öffnung 30 gebildet, in der der Benutzer seine Finger einführen kann, um das Fahrradwerkzeug 20 fest zu umgreifen. Das Fahrradwerkzeug 20 weist ein erstes Ende 34 und ein zweites Ende 36 auf. An seinem ersten Ende 34 weist das Fahrradwerkzeug 20 auf der ersten Seite 26 einen Montagehaken 40 auf und auf seiner zweiten Seite 28 einen Demontage 44. Auf der Seite 28 ist ein Fingerschutz 50 angeordnet bzw. die Seite 28 kann als Fingerschutz 50 ausgebildet sein. Auf dem Körper 24 sind an den Enden 34, 36 jeweils Auflageflächen 54, 58 für den Daumen gebildet. Die Auflageflächen 54 und 58 können Öffnungen, Rippen, Unebenheiten oder andere Strukturen aufweisen, die ein Verrutschen des Daumens verhindern. An der Seite 26 sind bevorzugt Konturelemente 62 vorgesehen, die in der Öffnung jeweils einen Vorsprung bilden und zwischen die die Finger des Benutzers gelegt werden können. Dadurch wird eine sichere Haltung des Fahrradwerkzeus 20 ermöglicht und ein Verrutschen wird verhindert.

Der Montagehaken 40 weist einen geraden Abschnitt 70 auf, der zur Seite 26 in einem spitzen Winkel verläuft. Der Winkel ist bevorzugt der zu erwartenden Lage des Reifenwulstes 6 bzw. der Reifeneinlage 8 angeglichen. Er liegt bevorzugt zwischen 35° und 50° und beträgt insbesondere 41°.

An den Abschnitt 70 schließt sich ein in Richtung der Seite 26 gekrümmter Abschnitt 72 an, an den sich ein von der Seite 26 weggekrümmter Abschnitt 74 anschließt. Abschnitte 72 und 74 bilden einen Rüssel 76. Der Abschnitt 74 ist eine Nase 78 zur Führung des Reifenwulstes 6.

Der Demontagehaken 44 weist einen Höcker 82 bzw. Bügel auf, der sich in einer Richtung 84, die entlang des Hakens 44 von dem ersten Ende 34 wegführt, in seiner Breite zunächst verbreitet und sich dann wieder verjüngt. Der Höcker hat bevorzugt eine Mindestdicke von 5 mm und hat insbesondere eine Dicke von 7,8 mm. Die maximale Dicke sollte im unteren Drittel, d.h. dem Drittel, welches am meisten von dem Ende 34 entfernt ist, erreicht werden. Der untere Winkel, d.h. der Winkel zwischen einer der Seite 28 zugewandten Seite des Hakens 44 und dem Verlauf des Höckers im unteren Drittel liegt bevorzugt zwischen 50° und 65°, und beträgt insbesondere 58°.

In dem Haken 44 ist eine Öffnung 88 gebildet, wodurch bei der Produktion Material gespart bzw. eine Materialanhäufung beim Spritzguss vermieden werden kann. Der Körper 24 und die Haken 40, 44 sind vorzugsweise einstückig aus Kunststoff gefertigt. Das Material ist bevorzugt PA6.6+.

Zwischen der Seite 28 des Körpers 24 und dem Haken 44 ist eine Nut 90 gebildet. Durch die Nut 90 und den Höcker 82 kann ein Mindestabstand bereitgestellt werden, der wenigstens der Dicke der Felgenflanke entspricht. Der Demontagehaken 44 weist an seinem Ende vorteilhafterweise einen Einrasthaken 94 für das Felgenhorn 12 auf. Die beiden Haken 40, 44 können beliebig zueinander angeordnet werden. Aus Designgründen haben sie bevorzugt in Bezug aufeinander einen Winkel von 71 °. Der Hakel 40 hat vorteilhafterweise eine Länge von 40mm bis zur Führungsnut und der Haken 44 vorteilhafterweise eine Länge von 24 mm.

Das Fahrradwerkzeug 20 weist an seinem Ende 36 bevorzugt einen dritten Haken 96 auf mit einem gekrümmten Abschnitt 98 bzw. einer Nase.

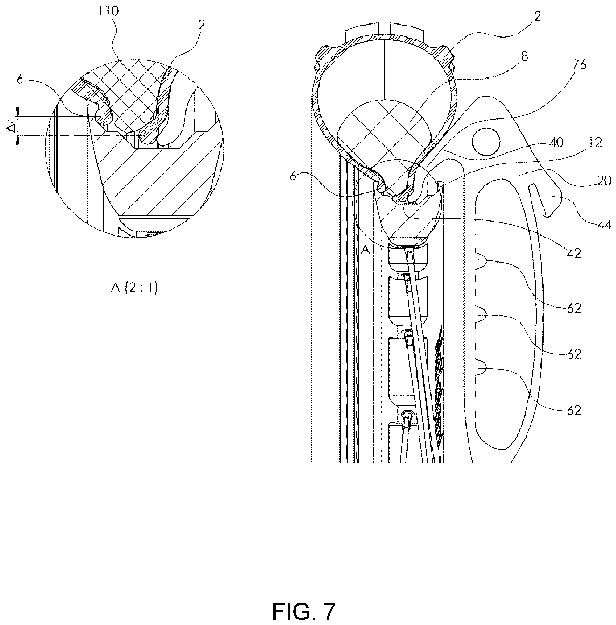

Anhand der FIG. 7 wird die Reifenmontage mit Hilfe des Fahrradwerkzeuges 20 erläutert. Mit dem Bezugszeichen 110 ist eine ausschnittsweise Vergrößerung bezeichnet. Der Montage-Haken 40 wird zwischen Reifen 2 und Felgenbett 42 eingesetzt. Mit leichtem Druck zur Felgenmitte wird nun der Reifenwulst 6 in den Bereich mit dem geringsten Durchmesser verschoben. Der Rüssel 76 dient dabei der Führung, damit das Werkzeug 20 rundherum geschoben werden kann. Die Felge 16 weist im Zentrum den geringsten Umfang auf. Um eine einfachere De-/Montage zu ermöglichen, muss also der Reifenwulst 6 rundherum ins Zentrum geschoben werden. So bedeutet z.B. bei einem Felgendurchmesser von 600 mm und dem Höhengewinn Δr = 3 mm eine Verringerung des Umfangs von 19 mm. Da der Reifenwulst 6 in Umfangsrichtung nicht oder nur gering dehnbar ist, folgt daraus eine Senkung der Spannung in der Verbindung Reifen 2 - Felge 16.

Der beschiebene Montagehaken 40 dient dieser Vorbereitung. Die "rüsselartige" Ausführung ist besonders bei der Verwendung von Reifeneinlagen 8 notwendig, da hier der Reifenwulst 6 unter die Reifeneinlage 8 (auch in Umfangsrichtung unter Spannung) geschoben werden muß. Das untere Ende bzw. der weggerümmte Abschnitt 74 ist bevorzugt derart geformt, dass die Spitze bzw. Nase 78 nicht größer, als der Querschnitt des Reifenwulstes 6 sein darf.

Die Länge des gekrümmten Abschnittes 72 beträgt bevorzugt zwischen 8-12 mm, um eine axiale Kraftübertragung sicherzustellen. Die entstandene Nut vor dem zweiten Stück 74 dient der Führung. Die Länge des Abschnittes 74 beträgt vorzugsweise zwischen 3 und 5 mm, und beträgt insbesondere 4,1 mm. Die Länge des Abschnitts 70 beträgt vorzugsweise zwischen 30 und 50 mm und beträgt insbesondere 40 mm, wobei die Längenrelation der Abschnitte 74/70 ungefähr 1/10 beträgt.

Durch die Kombination des Griffs 30 und dem Montagehaken 40 bzw. Demontagehaken 44 ist eine einfache andauernd zu wiederholende tangentiale Wischbewegung möglich.

Der Abstand der Fläche bzw. Seite 26 des Fahrradwerkzeuges und der Nase 78 des Montage-Hakens 40 sind vorteilhafterweise so gewählt, dass eine Verschiebung des Reifenwulstes 6 mindestens zur Felgenbett-Mitte 42 möglich ist. Der gerade Abschnitt 70 des Montage-Hakens 40 ist bevorzugt derart dimensioniert, dass er genügend Stützfläche für den Reifen 2 bietet. Die Nase 78 ist vorteilhafterweise so dimensioniert, dass eine Führung des Reifenwulstes 6 möglich ist und eine Beschädigung eines gegebenenfalls verbauten Felgenbandes vermieden wird.

Der Reifenwulst 6 des Reifens 2 hat eine fixe Länge bzw. einen definierten Umfang. In der äußeren oder sogar eingehakten Position mit großem Durchmesser sitzt der Reifenwulst 6 mit großer Spannung auf der Felge 16. Diese Spannung ist für den Fahrbetrieb unabdingbar. Bei der Montage des Reifens 2 stellt dies jedoch ein Hindernis dar. Durch die Eigenspannung des Reifens 2 und den zusätzlichen Gegendruck der Reifeneinlage 8 wird der Reifenwulst 6 nach außen in Richtung größerem Durchmesser der Felge 16 gedrückt. Mit dem Montagehaken 40 lässt sich der Reifenwulst 6 in den Bereich des geringsten Durchmessers der Felge 16 verschieben.

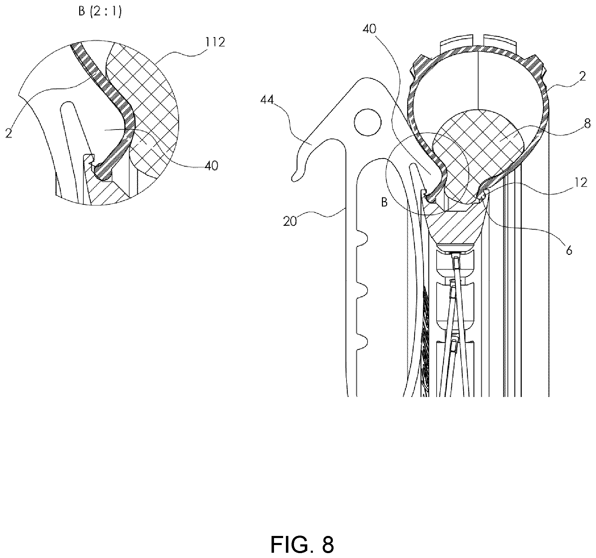

Anhand der FIG. 8 wird die Demontage eines Reifen 2 mit Hilfe des Demontage-Hakens 40 erläutert. Mit dem Bezugszeichen 112 ist eine ausschnittsweise Vergrößerung bezeichnet. Das Demontagewerkzeug bzw. der Demontage-Haken 40 ermöglicht von außen das Verschieben der Reifeneinlage 8 zum Reifeninneren. Auf diese Weise wird eine weitere Demontage von Hand erleichtert. Der Einrasthaken 94 des Demontage-Hakens 40 verhindert dabei das Herausrutschen des Demontage-Hakens 40 aus dem Flansch der Felge 16 und bildet in Verbindung mit der Nut 90 eine Führung zur Verschiebung des Werkzeuges 20 rund um die Felge 16.

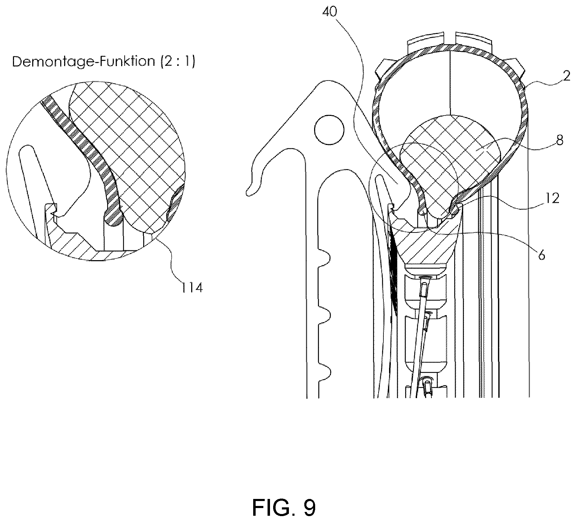

Anhand der FIG. 9 wird eine weitere Funktionalität des Demontage-Hakens 40 erläutert. Mit dem Bezugszeichen 114 ist eine ausschnittsweise Vergrößerung bezeichnet. In vielen Fällen lässt sich durch das Demontagewerkzeug bzw. den Demontage-Haken 40 der Reifenwulst 6 vom Felgenhorn 12 lösen. Der keilförmige Höcker 82 presst dabei den Reifen 2 gegen die Reifeneinlage 8 und schafft einen Abstand des Reifenwulstes 6 zum Felgenhorn 12.

Der dritte Haken 96, der optional vorgesehen sein kann und als Reifenheber bezeichnet wird, kann zur Demontage des Reifens 2 verwendet werden. Der Haken 96 wird dabei zwischen eine Seitenwand des Reifens 2 und der Felge 16 geschoben. Durch Drehung des Werkzeuges 20 kann dann der Reifen von der Felge 16 gehoben werden. Diese durch den zusätzlichen Haken 96 bereitgestellte Funktion kann hilfreich sein, wird jedoch nach Verwendung der Haken 40, 44 in vielen Fällen überflüssig, da zur weiteren Montage bzw. Demontage Handkräfte ausreichen.

## Patentansprüche

1. Fahrradwerkzeug (20) zur Montage und Demontage eines Fahrradreifens (2) auf eine Felge (16), umfassend einen Körper (24) mit einer ersten (26) und einer zweiten Seite (28), zwischen denen eine Öffnung (30) zur Aufnahme der Finger eines Nutzers gebildet ist, weiterhin umfassend einen Demontage-Haken zur Demontage des Reifens und einen Montage-Haken zur Reifenmontage, wobei der Montage-Haken (40) einen gebogenen Rüssel (76) aufweist, und wobei sich der Rüssel (76) an ein gerades Hakenstück (70) anschließt
**dadurch gekennzeichnet, dass**
der Rüssel (76) ein erstes Stück (72) aufweist, welches zum Körper (24) hingebogen ist, und ein sich daran anschließendes zweites Stück (74), welches vom Körper (24) weggebogen ist und eine Nase (78) zur Führung des Reifenwulstes (6) bildet.

2. Fahrradwerkzeug (20) nach Anspruch 1 wobei zwischen dem Demontage-Haken (44) und dem Körper (24) eine Nut (90) gebildet ist.

3. Fahrradwerkzeug (20) nach Anspruch 1 oder 2, wobei der Demontage-Haken (44) einen Höcker (82) aufweist.

4. Fahrradwerkzeug (20) nach Anspruch 3, wobei der Demontage-Haken (44) und der Montage-Haken (40) auf entgegengesetzten Seiten (26, 28) des Körpers (24) am gleichen Ende (34) des Körpers (26) angeordnet sind.

5. Fahrradwerkzeug (20) nach einem der Ansprüche 1 bis 4, wobei an einem Ende (36) des Körpers ein dritter Haken (96) zur Demontage des Reifens (2) vorgesehen ist.

6. Fahrradwerkzeug (20) nach Anspruch 5, wobei der dritte Haken (96) ein kanten-förmiges Endstück (98) aufweist.

7. Fahrradwerkzeug (20) nach Anspruch 6, wobei der dritte Haken (96) am entgegengesetzten Ende (36) zu den Demontage- (44) und Montage-Haken (40) angeordnet ist.

## Claims

1. Bicycle tool (20) for fitting and removing a bicycle tyre (2) on a rim (16), comprising a body (24) having a first (26) and a second side (28), between which an opening (30) for receiving the fingers of a user is formed, further comprising a tyre removal hook and a tyre fitting hook, wherein the fitting hook (40) has a curved protruding portion (76), and wherein the protruding portion (76) is connected to a straight hook piece (70) **characterized in that** the protruding portion (76) has a first piece (72), which is bent towards the body (24), and an adjoining second piece (74), which is bent away from the body (24) and forms a nose (78) for guiding the tyre bead (6).

2. Bicycle tool (20) according to Claim 1, wherein a groove (90) is formed between the removal hook (44) and the body (24).

3. Bicycle tool (20) according to Claim 1 or 2, wherein the removal hook (44) has a protuberance (82).

4. Bicycle tool (20) according to Claim 3, wherein the removal hook (44) and the fitting hook (40) are arranged on opposite sides (26, 28) of the body (24) at the same end (34) of the body (26).

5. Bicycle tool (20) according to one of Claims 1 to 4, wherein a third hook (96) is provided at one end (36) of the body to remove the tyre (2).

6. Bicycle tool (20) according to Claim 5, wherein the third hook (96) has an edge-shaped end piece (98).

7. Bicycle tool (20) according to Claim 6, wherein the third hook (96) is arranged at the opposite end (36) to the removal (44) and fitting hook (40).

## Revendications

1. Outil de bicyclette (20) pour le montage et le démontage d'un pneu de bicyclette (2) sur une jante (16), comprenant un corps (24) avec un premier (26) et un deuxième côté (28), entre lesquels est formée une ouverture (30) pour loger les doigts d'un opérateur, comprenant en plus un crochet de démontage pour le démontage du pneu et un crochet de montage pour le montage du pneu, sachant que le crochet de montage (40) comporte un rostre incurvé (76) et sachant que le rostre (76) se raccorde à une pièce de crochet droite (70), **caractérisé en ce que**
le rostre (76) comporte une première pièce (72), laquelle est recourbée vers le corps (24) et une deuxième pièce (74) s'y raccordant, laquelle est incurvée s'écartant du corps (24) et forme un mentonnet (78) destiné à guider le talon du pneu (6).

2. Outil de bicyclette (20) selon la revendication 1, sachant qu'une rainure (90) est formée entre le crochet de démontage (44) et le corps (24).

3. Outil de bicyclette (20) selon la revendication 1 ou 2, sachant que le crochet de démontage (44) comporte un bossage (82).

4. Outil de bicyclette (20) selon la revendication 3, sachant que le crochet de démontage (44) et le crochet de montage (40) sont disposés sur des côtés opposés (26, 28) du corps (24) à la même extrémité (34) du corps (26) .

5. Outil de bicyclette (20) selon l'une quelconque des revendications 1 à 4, sachant qu'un troisième crochet (96) est prévu à une extrémité (36) du corps pour le démontage du pneu (2).

6. Outil de bicyclette (20) selon la revendication 5, sachant que le troisième crochet (96) comporte un embout en forme de bord (98).

7. Outil de bicyclette (20) selon la revendication 6, sachant que le troisième crochet (96) est disposé à l'extrémité opposée (36) du crochet de démontage (44) et de montage (40).
